# EUROPÄISCHE PATENTSCHRIFT

(11) **EP 2 528 790 B1**
(45) Veröffentlichungstag und Bekanntmachung des Hinweises auf die Patenterteilung: **10.06.2015**
(21) Anmeldenummer: 11702013.1
(22) Anmeldetag: 28.01.2011
(51) Int. Cl.: B60T 8/48

(54) **VERFAHREN ZUM BETREIBEN EINES BREMSSYSTEMS FÜR EIN KRAFTFAHRZEUG UND BREMSSYSTEM**
METHOD FOR OPERATING A BRAKE SYSTEM FOR A MOTOR VEHICLE AND BRAKE SYSTEM
PROCÉDÉ PERMETTANT DE FAIRE FONCTIONNER UN SYSTÈME DE FREINAGE POUR UN VÉHICULE AUTOMOBILE ET SYSTÈME DE FREINAGE

(30) Priorität: 11.02.2010 DE 102010001822; 28.01.2010 DE 102010001312
(43) Veröffentlichungstag der Anmeldung: 05.12.2012
(73) Patentinhaber: Continental Teves AG & Co. oHG, 60488 Frankfurt (DE)
(72) Erfinder: ROSS, Scott, 61440 Oberursel (DE); SCHOENBOHM, Alexander, 60385 Frankfurt (DE); MATHIS, Florian, 66265 Heufweiler (DE)
(86) Internationale Anmeldenummer: PCT/EP2011/051257
(87) Internationale Veröffentlichungsnummer: WO 2011/092308

(56) Entgegenhaltungen:
- WO-A1-2004/101308
- DE-A1- 10 129 594
- DE-A1- 19 604 134
- DE-A1-102004 044 599
- JP-A- 7 336 805

## Beschreibung

Die Erfindung betrifft ein Verfahren gemäß Anspruch 1 sowie ein Bremssystem gemäß Anspruch 11.

Kraftfahrzeuge, deren Antriebs- bzw. Bremssysteme eine oder mehrere elektrische Maschinen umfassen, gewinnen zunehmend an Bedeutung. Hierbei kann die elektrische Maschine häufig auch als Antrieb eingesetzt werden, solange eine Batterie des Kraftfahrzeugs genügend elektrische Energie gespeichert hat. Es ist z.B. im Hinblick auf die Reichweite eines elektrischen Antriebs wünschenswert, die Batterie oder die Batterien des Kraftfahrzeuges nicht nur im Stand aufzuladen, sondern dies auch während des Betriebs des Kraftfahrzeuges zu tun. Wird die elektrische Maschine als Generator betrieben, so kann beim Bremsen des Kraftfahrzeugs durch Umwandlung der Bewegungsenergie bzw. Rotationsenergie der mit dem elektrischen Antrieb verbundenen Achse bzw. der daran befestigten Räder elektrische Energie gewonnen und in der Batterie gespeichert werden.

Das durch die Rekuperation, also die (Rück-)Gewinnung von elektrischer Energie durch den Generator, aufgebaute Bremsmoment ist von der Geschwindigkeit des Kraftfahrzeugs und dem Füllstand der Batterie abhängig. Um in jedem Fall hinreichende Bremsverzögerung aufbringen zu können, weisen Bremssysteme z.B. für Hybridfahrzeuge, die elektrischen Antrieb und Verbrennungsmotor kombinieren, neben der elektrisch-regenerativen Bremse (also dem Generator) zusätzliche Bremsmittel auf. Diese zusätzlichen Bremsmittel, die gewöhnlich in zwei gesetzlich vorgeschriebenen Bremskreisen realisiert sind, umfassen beispielsweise elektromechanische, hydraulische und/oder elektrohydraulische Reibbremsen.

Besonders das Zusammenwirken von hydraulischen Reibbremsen und einem Generator, welches wegen geringer Systemkosten und moderater Systemkomplexität wünschenswert ist, bedingt einige technische Herausforderungen: Für eine effiziente Rekuperation sollte das in der jeweiligen Fahrsituation maximal mögliche Bremsmoment des Generators genutzt werden. Weiterhin sollte ein Übergang zwischen einem Abbremsen des Kraftfahrzeugs durch die Bremsverzögerung des Generators und einem Abbremsen des Kraftfahrzeugs durch Reibbremsen möglich sein, ohne dass es zu ruckartigen Änderungen der Bremsverzögerung oder einer ungünstigen Bremskraftverteilung kommt. Außerdem muss vermieden werden, dass durch die Entkopplung der elektrisch-regenerativen Bremsung durch den Generator von dem Bremspedal für den Fahrer ein ungewöhnliches Pedalgefühl entstehen, so dass er die von ihm erzielte Bremswirkung schlecht einschätzen kann.

In der DE 196 04 134 A1 wird ein Verfahren und eine Vorrichtung zur Steuerung der Bremsanlage von Fahrzeugen mit Elektroantrieb vorgeschlagen, bei welchen in einem ersten Bereich des Fahrerbremswunsches nahezu ausschließlich die regenerative Abbremsung das Bremsmoment aufbringt, wobei die hydraulisch betätigbaren Reibungsbremse im wesentlichen kein Bremsmoment aufbringt. Dies wird dadurch realisiert, dass in diesem Bereich des Bremswunsches das vom Fahrer durch die Bremspedalbetätigung in die Radbremszylinder einströmende Druckmittel durch entsprechende Steuerung in eine Speicherkammer zurückgeführt wird.

Aus der WO 2004/101308 A1 ist ein Bremssystem sowie ein Verfahren für die Regelung eines Bremssystems eines Kraftfahrzeuges bekannt, das eine elektrisch-regenerative Bremse, insbesondere einen Generator, und eine Anzahl von mindestens einem Bremsdruckerzeugungsmittel über ein Bremsmittel angetriebene hydraulische Reibbremsen aufweist, dessen Gesamtverzögerung sich aus Verzögerungsanteilen der Reibbremsen und der elektrisch-regenerativen Bremse zusammensetzt. Um einen möglichst hohen Bremskomfort und ein angenehmes Bremsgefühl zu erzielen, wird beim Bremsen mit der elektrisch regenerativen Bremse Bremsmittel in einen Niederdruckspeicher abgeleitet. Hierbei findet eine aufwendige Regelung statt, bei der Hydraulikventile in einem genau bemessenen teilgeöffneten Zustand gehalten werden.

Die zwischen Prioritätsdatum und Anmeldetag der vorliegenden Anmeldung veröffentlichte DE102008054859A1 offenbart ein Verfahren zur Steuerung einer Bremsbetätigung einer hydraulischen Fahrzeugbremsanlage eines Kraftfahrzeugs, das einen Elektro-Antriebsmotor aufweist, der zum Bremsen des Kraftfahrzeugs als Generator betreibbar ist, wobei die Fahrzeugbremsanlage einen muskelkraftbetätigbaren Hauptbremszylinder aufweist, an den eine Radbremse angeschlossen ist. Wenn bei einer Bremsbetätigung der Elektro-Antriebsmotor als Generator betrieben wird, wird durch Öffnen des Ventils ein Bremsflüssigkeitsvolumen in den Hydrospeicher geleitet und dadurch ein Radbremsdruck in der Radbremse verringert. Vorzugsweise wird ein Verstärkungsfaktor des Bremskraftverstärkers bei einer Bremsbetätigung mit Generatorbetrieb des Elektro-Antriebsmotors reduziert.

Ein Nachteil der bisher beschriebenen Bremssysteme liegt darin, dass es aufgrund von unterschiedlichen Reibungsverlusten in den beiden Druckspeichern (wodurch eine Kolbenbewegung bei unterschiedlichen Drücken einsetzt) und/oder dem Druckstangenkreis (DK) und dem Schwimmkreis (SK) des Tandemhauptzylinders dazu kommen kann, dass nur der Druckspeicher eines der beiden Bremskreise befüllt wird. Dies kann dann zu einem unkomfortablen Übergang ("Blending") von im Wesentlichen elektrisch-regenerativer Bremsung zu kombinierter Bremsung mit Generator und Reibbremse oder reiner Reibbremsung führen.

Aus der nicht vorveröffentlichten DE102010039816.0 ist ein Verfahren zum Betreiben eines Bremssystems eines Kraftfahrzeuges bekannt, wobei das Bremssystem einen elektrischen Generator und einen ersten und einen zweiten hydraulischem Bremskreis mit jeweils ersten und zweiten hydraulischen Betriebsbremsen, einem Tandemhauptzylinder, einem Reservoir für Bremsflüssigkeit sowie ein Bremspedal umfasst. Bei einer Betätigung des Bremspedals durch den Fahrer wird die verfügbare Bremskraft des Generators bestimmt und daraus ein äquivalentes Bremsflüssigkeitsvolumen berechnet, das zu einer hydraulischen Bremsung des Kraftfahrzeuges mit der gleichen Bremskraft korrespondiert, und das äquivalente Bremsflüssigkeitsvolumen aus dem zweiten Bremskreis wird in eine mit dem zweiten Bremskreis verbundene Volumeneinheit geleitet. Dies gewährleistet ein komfortables Pedalgefühl für den Fahrer, hat aber den Nachteil, dass die als zusätzliches Bauteil ausgeführte Volumeneinheit die Systemkomplexität erhöht.

Die Aufgabe der vorliegenden Erfindung besteht darin, ein Bremssystem eines Kraftfahrzeugs zu verbessern, welches eine elektrisch-regenerative Bremse und ein hydraulisches Bremssystem mit einem ersten Bremsdruckerzeugungsmittel umfasst, an welches in mindestens zwei Bremskreisen angeordnete hydraulisch betätigbare Reibbremsen angeschlossen sind, wobei jeder Bremskreis zumindest einen Druckspeicher und elektrisch steuerbare Hydraulikventile aufweist. Die Gesamtverzögerung des Fahrzeugs setzt sich im Allgemeinen aus Verzögerungsanteilen der Reibbremsen und der elektrisch-regenerativen Bremse zusammen. Es soll ein für den Fahrer komfortables Pedalgefühl und eine effiziente Rekuperation bei möglichst geringer Systemkomplexität bereitgestellt werden.

Diese Aufgabe wird erfindungsgemäß durch ein Verfahren gemäß Anspruch 1 und ein Bremssystem gemäß Anspruch 11 gelöst.

Es wird also ein Verfahren bereitgestellt, bei dem ein Bremssystem für ein Kraftfahrzeug gesteuert und/oder geregelt wird, das mindestens eine elektrisch-regenerative Bremse und ein Druckmittel-betriebenes, insbesondere hydraulisches, Bremssystem mit Radbremsen aufweist, wobei die den einzelnen Rädern zugeordneten Radbremsen in mindestens zwei Bremskreisen angeordnet sind, welche von einem ersten Bremsdruckerzeugungsmittel, insbesondere einem Tandemhauptbremszylinder, mit Druckmittel beaufschlagbar sind, und wobei jeder Bremskreis zumindest einen Druckspeicher und mindestens zwei elektronisch ansteuerbare Hydraulikventile umfasst. Erfindungsgemäß wird bei einem Bremsen mit der oder den elektrisch-regenerativen Bremsen durch eine geeignete Ansteuerung mindestens eines Hydraulikventils zu einem Zeitpunkt Druckmittel nur in genau einen vorbestimmten Druckspeicher abgeleitet.

Durch das Ableiten des Bremsmittels in einen Druckspeicher findet bei einer geringen Bremspedalbetätigung durch den Fahrer eine nahezu reine elektrisch-regenerative Bremsung statt, womit eine effiziente Rekuperation und (durch den einer Reibbremsung entsprechenden "Bremsmittelverbrauch") ein für den Fahrer komfortables Pedalgefühl gewährleistet sind. Vorteilhafterweise wird durch das Ableiten des Bremsmittels nur in genau einen Druckspeicher sichergestellt, dass dieser Druckspeicher mit einem definierten Volumen an Bremsmittel befüllt ist. Eine vorbestimmte Wahl des genau einen Druckspeichers ermöglicht es beispielsweise, bei aufeinander folgenden Bremsvorgängen die Anzahl von Betätigungen geeignet auf die Druckspeicher der beiden Bremskreise zu verteilen, womit eine lange Lebensdauer des Bremssystems erreicht werden kann.

Erfindungsgemäß werden die Hydraulikventile, insbesondere Einlass- und Auslassventile der Radbremsen in den beiden Bremskreisen derart angesteuert, dass zuerst der Druckspeicher des einen Bremskreises und danach der Druckspeicher des anderen Bremskreises befüllt wird. Somit wird durch eine geeignete Wahl der Ventilöffnungszeiten eine definierte Befüllung der beiden Druckspeicher erreicht, ohne dass eine aufwendige analoge Steuerung der Ventile erfolgen muss. Diese bekannte Menge von Bremsmittel kann dann später für das "Blending", also einen sanften Übergang zwischen einem Abbremsen des Kraftfahrzeugs durch die Bremsverzögerung des Generators und einem Abbremsen des Kraftfahrzeugs durch Reibbremsen herangezogen werden. Bevorzugt wird ein Befüllen eines Druckspeichers über ein Auslassventil nur einer der Radbremsen des Bremskreises durchgeführt. Dies verringert die Anzahl der Betätigungen der Auslassventile und verlängert die Lebensdauer des Bremssystems. Besonders bevorzugt wird ein Befüllen eines Druckspeichers, insbesondere das Befüllen des zuerst befüllten Druckspeichers, über das Auslassventil der Vorderradbremse des entsprechenden Bremskreises durchgeführt.

Es ist vorteilhaft, wenn eine der Radbremsen zumindest eines Bremskreises mit einem vorgegebenen Druckmittelvolumen beaufschlagt wird und danach diese Radbremse, insbesondere durch Schließen eines zugehörigen Einlassventils, hydraulisch von dem ersten Bremsdruckerzeugungsmittel, und insbesondere dem zugehörigen Druckspeicher, abgetrennt wird. Dadurch, dass die Radbremse von dem Bremsdruckerzeugungsmittel abgetrennt wird, verringert sich die durch Reibbremsen aufgebaute Verzögerung, womit die vom Generator erzeugte elektrische Energie maximiert wird. Durch geeignete Wahl der vor dem Abtrennen zugeführten Bremsmittelmenge wird eine unangenehme Rückwirkung auf das Bremspedal vermieden, wenn die Radbremse wieder mit dem Bremsdruckerzeugungsmittel verbunden wird.

Zur Begrenzung des Drucks in einer der Radbremsen wird vorteilhafterweise das Einlassventil (SO-Ventil) der betreffenden Radbremse geschlossen, nachdem eine vorgegebene Menge von Bremsmittel in der Radbremse erreicht ist, jedoch bevor ein nennenswerter Druck in der Radbremse erreicht wird. Dieser Vorbefüllungsvorgang ist vorteilhaft, um das Pedalgefühl in einem komfortablen Bereich zu halten, da hierdurch das Bremsmittelvolumen begrenzt wird, welches nach dem Öffnen des SO-Ventils verschoben wird. Durch das Schließen des SO-Ventils wird ein (weiterer) Druckaufbau in der entsprechenden Radbremse, hervorgerufen durch das Befüllen eines Druckspeichers (insbesondere über das Auslassventil der anderen Radbremse desselben Bremskreises) verhindert. Hierdurch wird die Abbremswirkung der Radbremse auf das Fahrzeug reduziert und damit die Effizienz der Energiegewinnung (geringere Reibungsverluste an dieser Bremse) gesteigert.

Es ist besonders vorteilhaft, wenn die Radbremse dann hydraulisch abgetrennt wird, wenn ein erstes vorgegebenes Maß einer Betätigung eines Bremsbetätigungspedals des Tandemhauptbremszylinders erreicht ist. Insbesondere wird das erste vorgegebene Maß mittels eines Pedalwinkelsensors und/oder einem geeignet platzierten Schalter detektiert. Das entsprechende Signal ist einfach auszuwerten und somit wird vorteilhafterweise eine einfache Steuerung des Bremssystems ermöglicht.

Ganz besonders vorteilhaft ist es, wenn zunächst ein Befüllen eines Druckspeichers über ein Auslassventil einer der Radbremsen begonnen wird und, wenn das erste vorgegebene Maß der Bremsbetätigung erreicht ist, eine Radbremse des das Auslassventil umfassenden Bremskreises hydraulisch abgetrennt wird.

Somit ist es möglich, die Radbremse erst dann abzutrennen, wenn der Bremsbelag bereits das Lüftspiel, also z.B. der im Ruhezustand einer Scheibenbremse herrschenden Abstand zwischen Bremsscheibe und Bremsbelag, durchlaufen hat und eine erste geringe Bremswirkung einsetzt. Hiermit kann die vor dem Abtrennen zugeführten Bremsmittelmenge so gewählt werden, dass eine unangenehme Rückwirkung auf das Bremspedal vermieden wird, ohne das Ableiten von Bremsmittel in den Druckspeicher zu behindern.

Zweckmäßigerweise wird das Befüllen des einen Druckspeichers beendet und das Befüllen des anderen Druckspeichers begonnen, wenn ein zweites vorgegebenes Maß einer Betätigung des Bremsbetätigungspedals erreicht ist, wobei das zweite vorgegebene Maß insbesondere mittels eines Pedalwinkelsensors detektiert wird und einem vorgegebenen Wert des durch die elektrisch-regenerative Bremse oder Bremsen gelieferte Bremsmoments entspricht, insbesondere einen vorgegebenen Anteil eines maximal gelieferten Bremsmoments der elektrisch-regenerative Bremse oder Bremsen. Eine Steuerung des Bremsmittels anhand eines derartigen Signals ist einfach zu realisieren. In Abhängigkeit von der Aufteilung der Bremskreise kann damit die geeignete Füllung der beiden Druckspeicher eingeteilt werden, so dass z.B. bei einer Diagonalaufteilung der Bremskreise beide Druckspeicher gleichmäßig befüllt werden.

In einer bevorzugten Ausführungsform der Erfindung wird die Befüllung der Druckspeicher beendet und die bisher abgetrennte Radbremse wieder mit dem ersten Bremsdruckerzeugungsmittel verbunden, wenn ein drittes vorgegebenes Maß einer Betätigung eines Bremsbetätigungspedals erreicht ist, wobei das dritte vorgegebene Maß insbesondere mittels eines Pedalwinkelsensors detektiert wird und einem vorgegebenen Wert des durch die elektrisch-regenerative Bremse oder Bremsen gelieferte Bremsmoments entspricht, insbesondere einem maximal gelieferten Bremsmoment der elektrisch-regenerative Bremse oder Bremsen. Wenn die vom Fahrer angeforderte Bremsverzögerung die vom Generator maximal bereitgestellte Verzögerung übersteigt, wird die bisher abgetrennte Radbremse wieder mit dem ersten Bremsdruckerzeugungsmittel verbunden, womit die fehlende Verzögerung durch Reibbremsen bereitgestellt wird. In einer besonders bevorzugten Ausführungsform der Erfindung erfolgt dieses Verbinden der bisher abgetrennten Radbremse mit dem ersten Bremsdruckerzeugungsmittel erst dann, wenn die vom Fahrer angeforderte Bremsverzögerung um einen vorgegebenen Schwellwert, insbesondere 0.05g, über der vom Generator maximal bereitgestellten Verzögerung liegt. Dieses Öffnen des Einlassventils der abgetrennten Radbremse kann wegen eines hohen Verzögerungswunsches oder wegen einer bei niedrigen Geschwindigkeiten abnehmenden Generatorverzögerung erforderlich sein.

In einer alternativen bevorzugten Ausführungsform der Erfindung wird die Befüllung der Druckspeicher beendet und die bisher abgetrennte Radbremse wieder mit dem ersten Bremsdruckerzeugungsmittel verbunden, wenn die Differenz zwischen dem an einer Position des ersten Bremskreises gemessenen Druck und dem an einer Position des zweiten Bremskreises gemessenen Druck einen vorgegebenen Schwellwert überschreitet. Somit wird eine zu starke Ungleichverteilung des Drucks in den beiden Bremskreisen mit eventuell unangenehmen Rückwirkungen auf das Bremsverhalten vermieden.

Vorzugsweise wird das erste Bremsdruckerzeugungsmittel, insbesondere durch Schließen eines Hydraulikventils, von den Radbremsen hydraulisch getrennt, insbesondere wenn das durch die elektrisch-regenerative Bremse oder Bremsen gelieferte Bremsmoment geringer ist als ein vom Fahrer angefordertes Bremsmoment; mittels eines zweiten Bremsdruckerzeugungsmittels, insbesondere einer Hydraulikpumpe, wird Bremsmittel aus beiden Druckspeichern in die Radbremsen gefördert. Dieser aktive Aufbau von zusätzlichem Bremsdruck kann ergänzend zu oder an Stelle von einem Öffnen des Einlassventils der abgetrennten Radbremse wegen eines hohen Verzögerungswunsches oder wegen einer bei niedrigen Geschwindigkeiten abnehmenden Generatorverzögerung erfolgen.

Es ist besonders vorteilhaft, wenn die Betätigung der Hydraulikventile eines Bremskreises alternierend erfolgt, insbesondere bei einem Bremsvorgang ein erstes Einlassventil geschlossen und ein erstes Auslassventil geöffnet wird während ein zweites Einlassventil geöffnet bleibt und ein zweites Auslassventil geschlossen bleibt und im darauf folgenden Bremsvorgang das zweite Einlassventil geschlossen und das zweite Auslassventil geöffnet wird, während das erste Einlass- und Auslassventil nicht betätigt werden. Somit werden die Betätigungen der Hydraulikventile möglichst gleichmäßig verteilt, was die Lebensdauer des Bremssystems erhöht.

Die Erfindung betrifft ebenfalls ein Bremssystem eines Kraftfahrzeuges, das mindestens eine elektrisch-regenerative Bremse und ein Druckmittel-betriebenes, insbesondere hydraulisches, Bremssystem mit Radbremsen aufweist, wobei die den einzelnen Rädern zugeordneten Radbremsen in mindestens zwei Bremskreisen angeordnet sind, welche von einem ersten Bremsdruckerzeugungsmittel, insbesondere einem Tandemhauptbremszylinder, mit Druckmittel beaufschlagbar sind, und wobei jeder Bremskreis zumindest einen Druckspeicher und elektronisch ansteuerbare Hydraulikventile umfasst, und wobei das Bremssystem eine elektronische Steuer- und Regeleinheit umfasst, durch welche bei einem Bremsen mit der oder den elektrisch-regenerativen Bremse mindestens ein Hydraulikventil derart angesteuert wird, dass zu einem Zeitpunkt Druckmittel in genau einen, insbesondere vorbestimmten, Druckspeicher abgeleitet wird.

Zweckmäßigerweise weist das Bremssystem mindestens ein zweites Bremsdruckerzeugungsmittel auf, insbesondere eine Hydraulikpumpe, mit welchem Bremsmittel aus einem Druckspeicher in eine oder mehrere Radbremsen befördert werden kann.

Besonders bevorzugt ist in jedem Bremskreis an mindestens einer Radbremse ein Drucksensor angebracht.

Erfindungsgemäß führt die elektrische Steuer- oder Regeleinheit ein Verfahren nach einem der Ansprüche 1 bis 10 durch.

Zweckmäßigerweise wird Druckmittel in den oder die Druckspeicher abgeleitet, welche auch für den Druckabbau z.B. während einer Bremsschlupfregelung eingesetzt werden.

In einer bevorzugten Ausführungsform der Erfindung ist der erste Bremskreis der Vorderachse und der zweite Bremskreis der Hinterachse des Kraftfahrzeugs zugeordnet.

In einer alternativen bevorzugten Ausführungsform der Erfindung ist der erste Bremskreis der hydraulischen Bremsanlage einem Rad der Vorderachse und einem Rad der Hinterachse und der zweite Bremskreis dem anderen Rad der Vorderachse und dem anderen Rad der Hinterachse zugeordnet. Ganz besonders bevorzugt handelt es sich um eine Diagonalaufteilung der Bremskreise, d.h. ein Vorderrad und ein diagonal gegenüberliegende Hinterrad sind in einem Bremskreis zusammengefasst.

Es ist zweckmäßig, wenn die in die Druckspeichern abgeleitete Menge von Bremsmittel je nach Aufteilung der Bremskreise angepasst wird. Für diagonal aufgeteilte Bremskreise ist es besonders zweckmäßig, wenn die Druckspeicher jeweils die gleiche Menge Bremsmittel aufnehmen. Besonders zweckmäßig ist es, wenn der Druckspeicher eines der Vorderachse zugeordneten Bremskreises eine größere Menge von Bremsmittel speichert als der Druckspeicher eines der Hinterachse zugeordneten Bremskreises, wobei das Verhältnis insbesondere 80:20 betragen sollte.

Vorzugsweise erfolgt eine Bremsung nur mit Reibbremsen, wenn das Kraftfahrzeug eine vorgegebene Mindestgeschwindigkeit unterschreitet. Bei Geschwindigkeiten unterhalb von z.B. 10 km/h nimmt die vom Generator aufgebaute Verzögerung stark ab.

Es ist vorteilhaft, wenn eine Bremsung nur mit Reibbremsen erfolgt, sobald die angeforderte Verzögerung eine vorgegebene Schwelle überschreitet. Hierdurch wird eine Gefährdung der Fahrstabilität durch eine ungünstige Bremskraftverteilung vermieden und das Eingreifen einer Bremsschlupfregelung erleichtert.

Für den Fall, dass jedem Bremskreis eine Vorderradbremse und die gegenüberliegende Hinterradbremse zugeordnet ist, erfolgt zweckmäßigerweise das Befüllen eines Druckspeichers, insbesondere das Befüllen des zuerst befüllten Druckspeichers, über das Auslassventil der Vorderradbremse des entsprechenden Bremskreises durchgeführt wird. In diesem Fall ist es besonders zweckmäßig, wenn in dem Bremskreis, dessen Druckspeicher nicht zuerst befüllt wird, die Vorderradbremse mit einem vorgegebenen Druckmittelvolumen beaufschlagt wird und danach diese Radbremse durch Schließen des zugehörigen Einlassventils hydraulisch von dem ersten Bremsdruckerzeugungsmittel abgetrennt wird.

Das Bremspedal weist vorzugsweise einen Pedalbetätigungssensor, z.B. in Form eines Pedalweggebers oder Pedalwinkelgebers, auf. Alternativ oder zusätzlich weist das Bremssystem bevorzugt einen Drucksensor auf, der in einer zum Druckerzeugungsmittel (z.B. Hauptzylinder) führenden Bremsleitung angeordnet ist. Anhand des Pedalbetätigungssensors und/oder des Drucksensors kann eine Ermittlung der Betätigung und/oder des Maßes der Betätigung des Bremspedals erfolgen. Bevorzugt wird das Signal des Pedalbetätigungssensors und/oder Drucksensors zur Steuerung oder Regelung des Bremssystems herangezogen.

In einer bevorzugten Ausführungsform der Erfindung findet eine Plausibilisierung der Signale des Pedalbetätigungssensors anhand einer Messung der Position des ersten Bremsdruckerzeugungsmittels statt, wobei diese insbesondere durch einen induktiven Sensor gemessen wird. In einer alternativen bevorzugten Ausführungsform der Erfindung wird eine sichere Erkennung des Fahrerwunschs gewährleistet, indem ein zusätzlicher Schalter an geeigneter Position montiert wird, der am Pedal oder an einem Kolben des Tandemhauptbremszylinders (THZ) befestigt ist und bei einer bestimmten Stellung des Bremspedals aktiviert wird. In einer weiteren alternativen Ausführungsform der Erfindung erfolgt eine Plausibilisierung der Daten des Pedalwinkelsensors, indem überprüft wird, ob der Druck im ersten Bremsdruckerzeugsmittel und/oder die Bremsmittelmenge in einem der Druckspeicher einen der entsprechenden Pedalstellung entsprechenden Wert überschreitet.

Vorteilhafterweise wird die Begrenzung des Drucks in der einen Radbremse bzw. die Beendigung des Befüllens der einen Radbremse durchgeführt, wenn das Maß der Pedalbetätigung einen ersten vorgegebenen Schwellenwert erreicht hat.

Um genau das entsprechende Bremsverhalten, das bei Reibbremsen eintreten würde, zu simulieren, wird vorteilhafterweise genau das Druckmittelvolumen von Bremsmittel in den oder die Druckspeicher abgeleitet, das von Reibbremsen aufgenommen werden würde, wenn das von einer elektrisch-regenerativen Bremse aufgebrachte Bremsmoment allein mit hydraulischen Reibbremsen aufzubringen wäre.

Um Druckmittel möglichst einfach über ein Hydraulikventil in den Druckspeicher abführen zu können, ist der Druckspeicher im Vergleich zum Hydrauliksystem des Bremssystems zweckmäßigerweise als Niederdruckspeicher (NDS) ausgelegt. Aufgrund des Druckunterschiedes muss zum Ableiten von Druckmittel in den Druckspeicher lediglich ein Hydraulikventil geöffnet werden.

Jeder der Druckspeicher ist vorteilhafterweise ausgangsseitig mit einem zweiten Bremsdruckerzeugungsmittel (z.B. einem Motor-Pumpen-Aggregat) verbunden. Bei einer Bremsmomentumverteilung von elektrisch-regenerativer Bremse auf die Reibbremsen wird das dafür benötigte Druckvolumen des Bremsmittels über das zweite Druckerzeugungsmittel aus dem Druckspeicher in die entsprechenden Hydraulikleitungen der Reibbremsen befördert. Zweckmäßigerweise wird ein Einfluss auf das erste Bremsdruckerzeugungsmittel dadurch verhindert, dass dieses über Hydraulikventile von den Radbremsen abgetrennt wird.

Um die vorgesehenen Druckerzeugungsprozesse mit den Bremsdruckerzeugungsmitteln aufbringen zu können, ist zweckmäßigerweise das erste Bremsdruckerzeugungsmittel ein mit oder ohne Hilfskraft betriebener Hauptbremszylinder, insbesondere Tandemhauptzylinder, und das zweite Druckerzeugungsmittel eine elektrisch ansteuerbar Hydraulikpumpe, insbesondere Kolbenpumpe.

Bevorzugt umfasst das Bremssystem eine elektronische Steuer- und Regeleinheit, welche die verfügbaren Informationen, z.B. von Pedalbetätigungssensor und/oder Drucksensor und/oder Generator-Moment, auswertet und die Hydraulikventile und ggf. das zweite Bremsdruckerzeugungsmittel entsprechend ansteuert.

Weitere bevorzugte Ausführungsformen ergeben sich aus den Unteransprüchen und der nachfolgenden Beschreibung eines Ausführungsbeispiels an Hand von Figuren.

Es zeigen schematisch:
- Figur 1: ein beispielsgemäßes Bremssystem im Ruhezustand,
- Fig. 2: ein schematisch dargestelltes Kraftfahrzeug,
- Fig. 3: den zeitlichen Ablauf eines beispielsgemäßen Bremsvorgangs,
- Fig. 4-8: Verfahrensschritte eines beispielsgemäßen Verfahrens,
- Fig. 9-13: weitere Verfahrensschritte eines beispielsgemäßen Verfahrens.

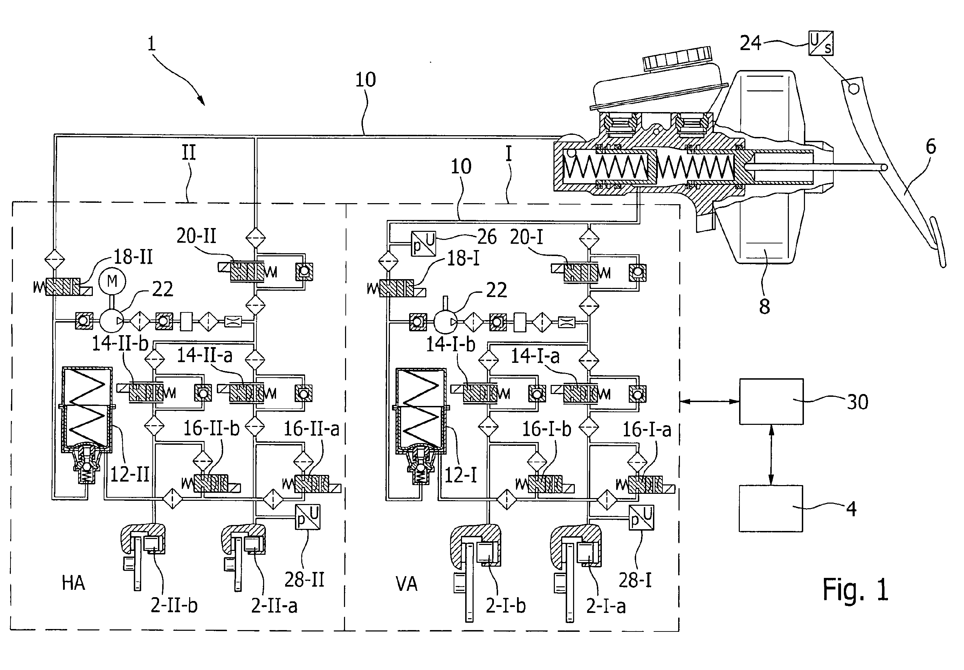

In Figur 1 ist ein Prinzipschaltplan eines Bremssystems 1 für ein Kraftfahrzeug dargestellt, welches zur Durchführung des erfindungsgemäßen Verfahrens geeignet ist. Der Fahrer des Kraftfahrzeugs gibt über das Bremspedal 6 den Verzögerungswunsch ein. Um mittels der Reibbremsen 2 ein Bremsmoment aufzubauen, ist das Bremssystem 1 mit einem ersten Bremsdruckerzeugungsmittel versehen, das als Tandemhauptbremszylinder 8 mit Hilfskraft ausgelegt ist. Dabei wird der vom Tandemhauptbremszylinder 8 aufgebrachte Bremsdruck über Hydraulikleitungen 10 mit einem Bremsmittel an die Reibbremsen 2 weitergegeben. Das beispielsgemäße Bremssystem umfasst zwei Bremskreise I, II, wobei jeweils zwei Radbremsen 2-I-a, 2-I-b bzw. 2-II-a, 2-II-b des Fahrzeugs in einem Bremskreis I, II zusammengefasst sind. Der erste Bremskreis I ist beispielsgemäß mit den Radbremsen 2-I-a, 2-I-b der Vorderachse VA verbunden, an dem zweiten Bremskreis II sind die Radbremsen 2-II-a, 2-II-b der Hinterachse HA angeschlossen. Das erfindungsgemäße Verfahren kann jedoch mit denselben Schritten auch in einer Bremsanlage mit diagonaler Bremskreisaufteilung und/oder einem Tandemhauptbremszylinder 8 ohne Hilfskraft durchgeführt werden.

Da bei dem in Fig. 1 dargestellten Beispiel die beiden Bremskreise I, II hydraulisch im Wesentlichen identisch aufgebaut sind, werden im Folgenden nur die hydraulischen Komponenten des ersten Bremskreises I beschrieben. Eine vom Hauptbremszylinder 8 ausgehende Bremsleitung verzweigt sich nach einem stromlos offenen Trennventil (TV) 20-I in zwei zu den Radbremsen 2-I-a, 2-I-b der Vorderachse VA führende Bremsleitungen, in welchen jeweils ein stromlos -also ohne elektrische Ansteuerung- offenes Einlassventil (SO-Ventil) 14-I-a, 14-I-b vorgesehen ist. Zwischen jedem Einlassventil (SO-Ventil) 14-I-a, 14-I-b und der entsprechenden Radbremse 2-I-a, 2-I-b geht von der jeweiligen Bremsleitung je eine Rückführleitung aus, in welcher je ein stromlos geschlossenes Auslassventil (SG-Ventil) 16-I-a, 16-I-b angeordnet ist. Beide Rückführleitungen sind über ein gemeinsames Bremsleitungsstück an einen Druckspeicher 12-I angeschlossen. Bremskreis I weist eine durch einen elektrischen Antriebsmotor angetriebene, hochdruckerzeugende Pumpe (Motor-Pumpen-Aggregat) 22 auf (zweites Bremsdruckerzeugungsmittel). Diese ist ansaugseitig mit dem Druckspeicher 12-I verbunden. Ausgangsseitig ist die Pumpe 22 mit der Bremsleitung zwischen Trennventil 20-I und den Einlassventilen 14-I verbunden. Zwischen Druckspeicher 12-I und Pumpe 22 führt eine weitere Bremsleitung über ein stromlos geschlossenes elektronisches Umschaltventil (EUV) 18-I zu der Bremsleitung zwischen Hauptbremszylinder 8 und Trennventil 20-I.

Bei dem Bremssystem 1 handelt es sich um ein regeneratives Bremssystem, das neben den hydraulisch betätigten Reibbremsen 2 auch eine elektrische Maschine 4 aufweist, die zur Erzeugung von elektrischer Energie als Generator betrieben werden. Über einen Weggeber 24, der am Bremspedal 6 angeordnet ist, wird das Maß der Bremspedalbetätigung erfasst. Prinzipiell können aber auch andere Sensoren eingesetzt werden, die ein zur Bremsbetätigung durch den Fahrer proportionales Signal liefern. Zusätzlich ist ein Drucksensor 26 vorhanden, der sich an der zum Tandemhauptzylinder 8 führenden Hydraulikleitung 10 des Bremskreises I befindet und den Vordruck bestimmt. In einer bevorzugten Ausführungsform der Erfindung wird der Bremsmitteldruck an den Radbremsen 2 über Drucksensoren 28-I, 28-II bestimmt, die jeweils in einer Hydraulikleitung einer Radbremse 2-I-a, 2-II-a angeordnet sind. In einer alternativen bevorzugten Ausführungsform der Erfindung wird der Druck in den Radbremsen anhand eines an sich bekannten Modells geschätzt.

Zur Steuerung und/oder Regelung des Bremssystems 1 umfasst dieses eine elektronische Steuer- und Regeleinheit 30, welche die elektronisch steuerbaren Hydraulikventile 14, 16, 18, 20 sowie die Pumpe 22 ansteuert. Um ein für den Fahrer möglichst komfortables Bremsgefühl über das Bremspedal 6 zu realisieren, kann während dem Betrieb des Generators 4 Bremsmittel in die beiden Druckspeicher 12 (NDS: Niederdruckspeicher) abgeleitet werden. In den Druckspeichern 12 vorhandenes Druckmittel kann mittels der Pumpe 22 in die Radbremsen 2 gefördert werden, wodurch ein zusätzliches Bremsmoment in den Radbremsen aufgebaut wird.

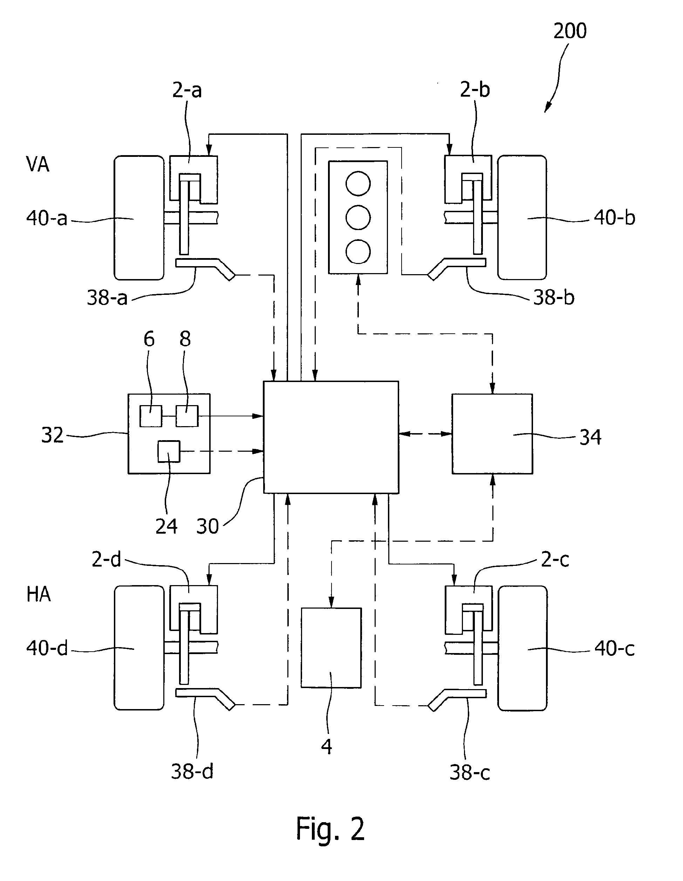

Figur 2 zeigt ein Kraftfahrzeug 200, welches ein zur Durchführung des erfindungsgemäßen Verfahrens geeignetes Bremssystem 1 aufweist. Bei dem beispielgemäßen Fahrzeug handelt es sich um ein Hybridfahrzeug, welches einen Verbrennungsmotor 36 und ein oder mehrere elektrische Antriebsmotoren 4 umfasst, die als Generator zur Ladung der Batterie angesteuert werden können, um eine oder mehrere nicht gezeigte Fahrzeugbatterien aufzuladen. Zur Steuerung des elektrischen Antriebs ist dabei eine Motorsteuereinheit 34 vorgesehen, welche mit der die hydraulische Bremsanlage steuernden elektronischen Steuer- und Regeleinheit 30 in Verbindung steht. Im gezeigten Beispiel wirkt die elektrisch-regenerative Bremse 4 auf die Hinterachse HA des Fahrzeugs.

Für das erfindungsgemäße Verfahren ist es jedoch prinzipiell nicht relevant, welche Räder 40-a, 40-b, 40-c, 40-d zusätzlich zu den Reibbremsen 2-a, 2-b, 2-c, 2-d regenerativ gebremst werden. Die unten beschriebenen Verfahrensschritte sind hiervon prinzipiell unabhängig.

Ein Bremswunsch des Fahrers wird über eine Bremsbetätigungseinheit 32 festgestellt, die ein Bremspedal 6, ein erstes Bremsdruckerzeugungsmittel 8, insbesondere einen Tandemhauptbremszlinder, und einen Pedalweg- oder Pedalwinkelsensor 24 umfasst. Diese leitet Bremsmittel (dargestellt als durchgezogene Linie) und elektrische Signale (dargestellt als gestrichelte Linie) an die elektronische Steuer- und Regeleinheit 30 weiter. Das Fahrzeug weist Radgeschwindigkeitssensoren 38-a, 38-b, 38-c, 38-d auf, die ihre Signale ebenfalls an die elektronische Steuer- und Regeleinheit 30 senden, wodurch z.B. eine Schlupfregelung des Bremsdrucks in den einzelnen Radbremsen 2-a, 2-b, 2-c, 2-d erfolgen kann.

Elektronische Steuer- und Regeleinheit 30 und Motorsteuereinheit 34 tauschen für eine elektrisch-regenerative Bremsung benötigte Informationen wie die momentane Fahrzeuggeschwindigkeit und die momentan verfügbare Generatorverzögerung aus. Während eines Bremsvorgangs kann hierbei eine Anforderung von Bremsverzögerung des Generators erfolgen. In einer alternativen Ausführungsform weist ein zur Durchführung des erfindungsgemäßen Verfahrens geeignetes Kraftfahrzeug eine elektrische Vakuumpumpe auf, die einen Unterdruckbremskraftverstärker mit Vakuum versorgt, um den Tandemhauptbremszylinder 8 mit Hilfskraft zu betreiben.

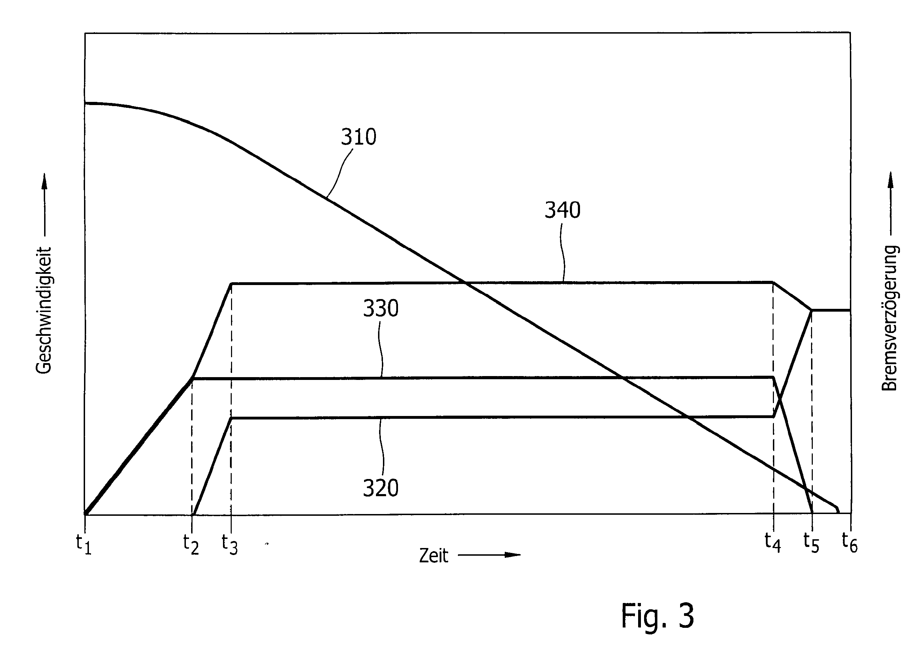

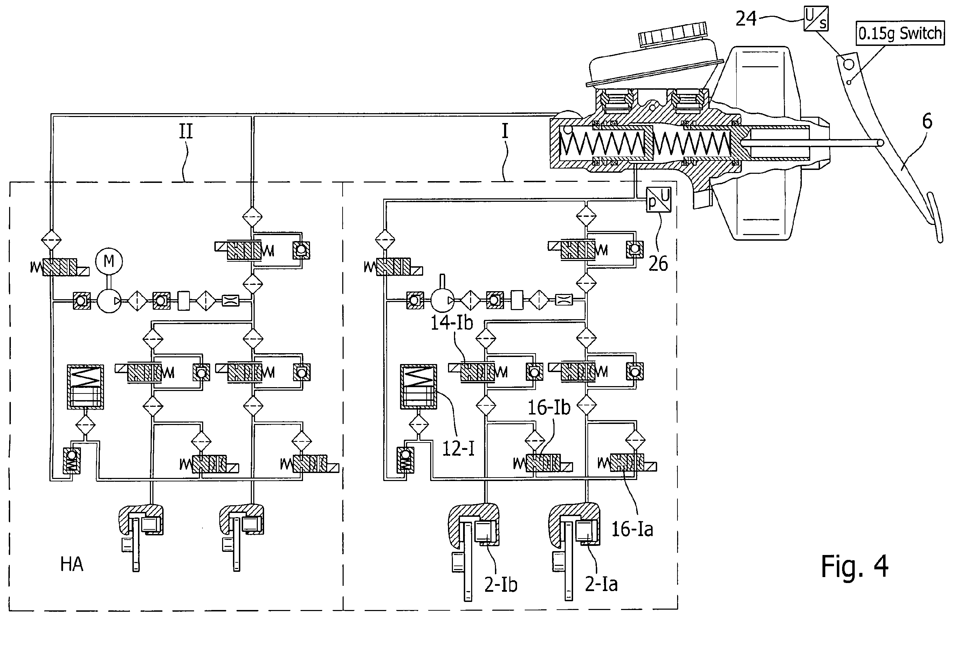

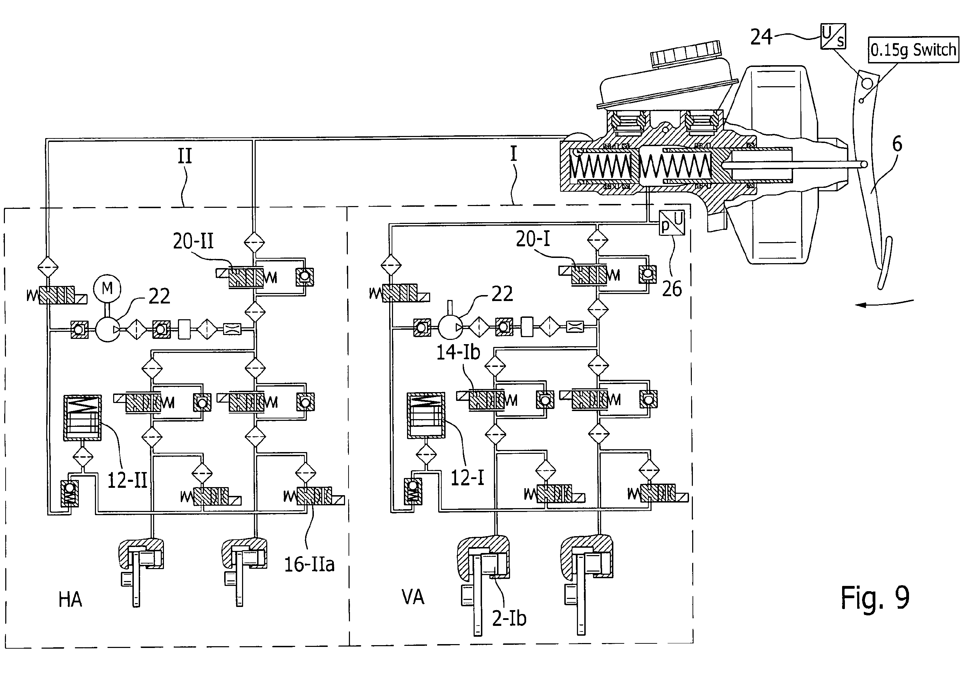

Der Ablauf eines beispielhaften Bremsvorgangs ist in Fig. 3 gezeigt. Als Abszisse ist die Zeit aufgetragen, die Ordinate gibt die Geschwindigkeit des Kraftfahrzeugs bzw. die momentane Bremsverzögerung an. Die Fahrzeuggeschwindigkeit ist als Linie 310, die Bremsverzögerung durch den Generator als Linie 330, die Bremsverzögerung durch Reibbremsen als Linie 320 dargestellt. Linie 340 gibt die resultierende Gesamtverzögerung an. Das Fahrzeug wird im Verlauf des Bremsvorgangs, der im Zeitpunkt t₁ beginnt und im Zeitpunkt t₆ endet, bis zum Stillstand abgebremst. Hierbei erfolgt zunächst eine Verzögerung des Fahrzeugs nur durch die elektrisch-regenerative Bremse. Zwischen t₁ und t₂ wird dazu das Druckmittel der Reibbremsen in Druckspeicher abgeleitet. Die detaillierten Schritte werden weiter unten anhand der Fig. 4-8 erläutert. Im Zeitpunkt t₂ wird das Befüllen der Druckspeicher beendet und die bisher abgetrennte Radbremse wieder mit dem Tandemhauptzylinder verbunden. Bis zum Zeitpunkt t₃ tritt der Fahrer stärker auf das Bremspedal und hält anschließend die Pedalstellung. Die zusätzlich angeforderte Verzögerung wird hierbei von den Reibbremsen bereitgestellt, während die Generatorbremsverzögerung konstant bleibt. Im Zeitpunkt t₄ ist die Geschwindigkeit des Wagens so weit gesunken, dass die Generatorverzögerung abnimmt. Daher findet zwischen t₄ und t₅ ein Blending-Vorgang statt, bei dem zusätzlicher Bremsdruck aufgebaut und der elektrisch-regenerative Verzögerung stufenlos verringert wird ("ramp-out"). Die detaillierten Schritte werden weiter unten anhand der Fig. 9-13 erläutert. Zum Zeitpunkt t₆ ist der Stillstand des Fahrzeugs erreicht.

In den Fig. 4-8 sind schematisch die einzelnen Schritte einer Ansteuerung der hydraulischen Komponenten während der Durchführung eines beispielsgemäßen Verfahrens zur Befüllung der Druckspeicher dargestellt.

Fig. 1 zeigt, wie oben bereits beschrieben, den Ruhezustand des Bremssystems 1, d.h. den Zustand ohne elektrische Ansteuerung der hydraulischen Komponenten, bevor der Fahrer das Bremspedal 6 betätigt hat. Die Ventile 14, 16, 18, 20 beider Bremskreise I, II befinden sich in ihrer stromlos-Grundstellung, die Druckspeicher 12 der beiden Bremskreise I, II sind unbefüllt und die Radbremsen 2 sind nicht betätigt.

Wenn der Fahrer das Bremspedal 6 betätigt, beginnt eine regenerative Bremsung und das SG-Ventil 16-Ia (nur) einer Radbremse 2-Ia wird angesteuert, so dass es sich wie in Fig. 4 dargestellt öffnet. Somit wird Druckmittel über das eine geöffnete SG-Ventil 16-Ia in den Druckspeicher 12-I abgeführt und der Druckspeicher 12-I des zugehörigen Bremskreises I beginnt sich zu füllen. Durch das Ableiten von Bremsmittel wird der Betrieb einer Radbremse simuliert. Das Bremspedal 6 gibt entsprechend dem abgeleiteten Druckmittelvolumen nach, so dass sich ein komfortables bzw. dem Fahrverhalten entsprechendes Bremsgefühl einstellt.

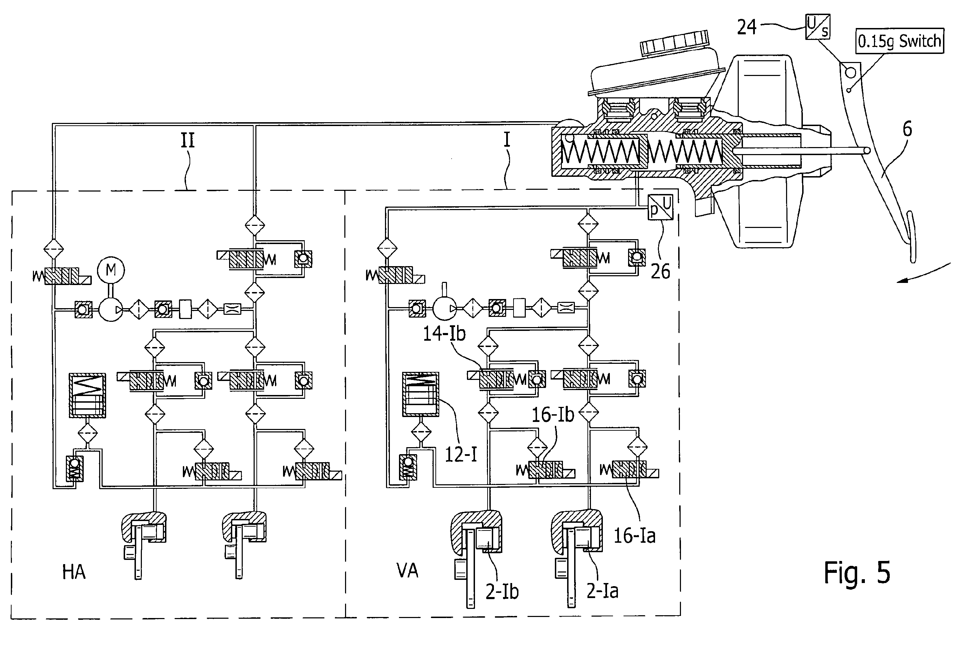

Die andere Radbremsen 2-Ib des Bremskreises I wird, da das zugehörige SG-Ventil 16-Ib geschlossen bleibt, befüllt. Wenn ein vorgegebenes Betätigungsmaß des Bremspedals 6, z.B. in Form eines vorgegebenen Vorbefüllungs-Weg des Bremspedals 6 (gemessen durch Sensor 24) oder eines vorgegebenen Druckes am Drucksensor 26, erreicht ist, wird das SO-Ventil 14-Ib der Radbremse 2-Ib geschlossen. Hierdurch wird der Druck in der Radbremse 2-Ib auf einem niedrigen Niveau begrenzt. Radbremse 2-Ib wird also mit einem vorgegebenen (geringen) Vorbefüllungsvolumen beaufschlagt, wobei die Bremsbeläge der Radbremse 2-Ib beispielsgemäß gerade oder kaum an der Bremsscheibe anliegt. Der Druckspeicher 12-I des Bremskreises I wird bei weiterer Betätigung des Bremspedals 6 über SG-Ventil 16-Ia weiter befüllt. Radbremse 2-Ia wird entsprechend dem Druck in Druckspeicher 12-I betätigt. Dieser Zustand ist in Fig. 5 dargestellt.

Das begrenzte Vorbefüllungsvolumen in Radbremse 2-Ib hält die Abbremsung an diesem Rad gering und steigert so die (Energie)Effizienz der Rekuperation, ohne jedoch störende Effekte auf das Bremspedal 6 hervorzurufen, wenn das SO-Ventil 14-Ib (später) wieder geöffnet wird (im Gegensatz zu der Situation, wenn Radbremse 2-Ib gar nicht befüllt würde), z.B. bei weiterer Bremsbetätigung durch den Fahrer oder beim "Blending".

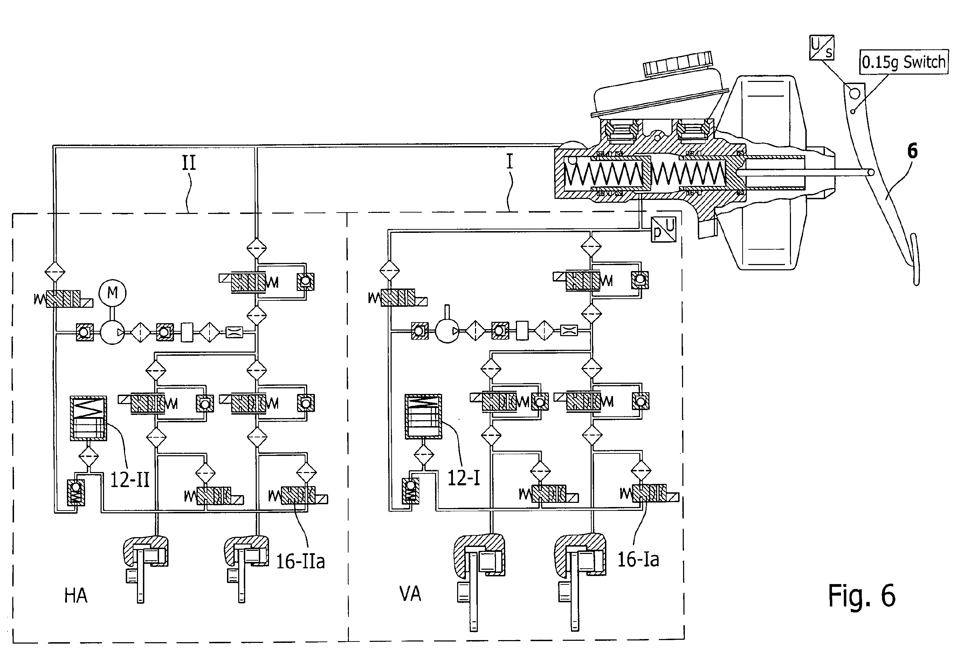

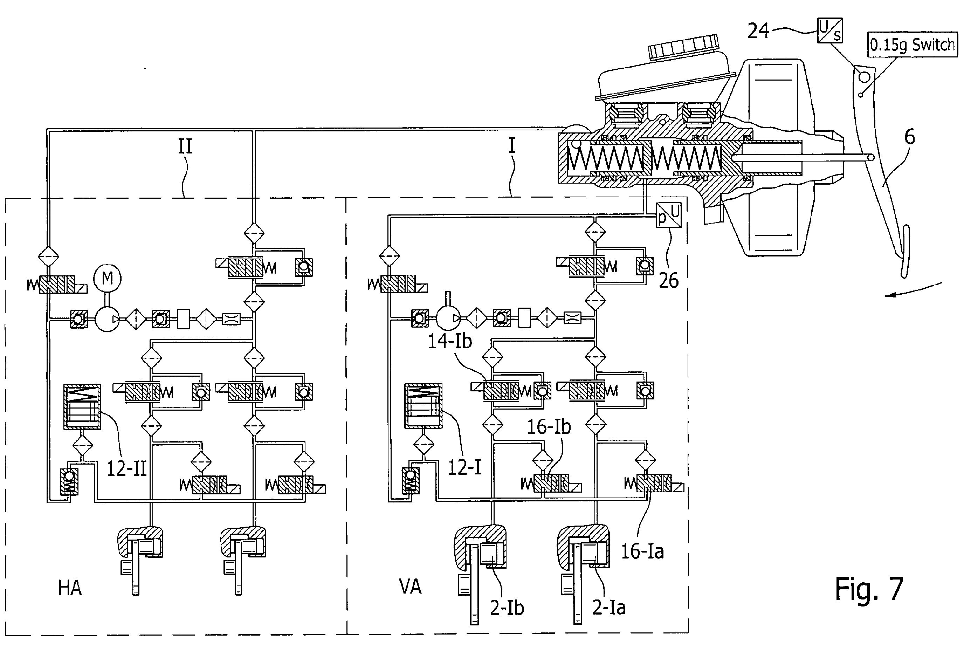

Wenn das vom Generator gelieferte Bremsmoment einem vorgegebenen Anteil des maximal vom Generator lieferbaren Moments (maximal erreichbare regenerative Verzögerung) entspricht, wird SG-Ventil 16-Ia geschlossen und eines der SG-Ventile des anderen Bremskreises II geöffnet, wie in Fig. 6 für 16-II-a dargestellt. Hierdurch wird das Befüllen des Druckspeichers 12-I beendet und bei weiterer Bremsbetätigung der Druckspeicher 12-II befüllt, wie in Fig. 7 dargestellt. Ziel ist es, beide Druckspeicher 12-I und 12-II mit hinreichend Bremsmittel zu befüllen, so dass später an allen vier Radbremsen 2 ein gleichmäßiges Blending möglich ist, und dabei das Bremsmittelvolumen in Bremskreis II zu begrenzen, damit an den zugehörigen Radbremsen 2-II nicht zu stark gebremst wird. Dies ist insbesondere dann wichtig, wenn es sich wie bei dem dargestellten Beispiel um eine Vorderachs-Hinterachs-Bremskreisaufteilung handelt. Hier sollte das Bremsmittelvolumen in der Hinterachse HA begrenzt werden, so dass die Hinterachse HA nicht durch zu starke Befüllung der Hinterachse-Radbremsen überbremst wird. Sich entsprechende Bremsmittelvolumen in der Vorder- und Hinterachse resultieren (aufgrund der üblichen unterschiedlichen Auslegung der Vorder- und Hinterachsbremsen) in einem größeren Druckanstieg in den Hinterachsbremsen als an den Vorderachsbremsen.

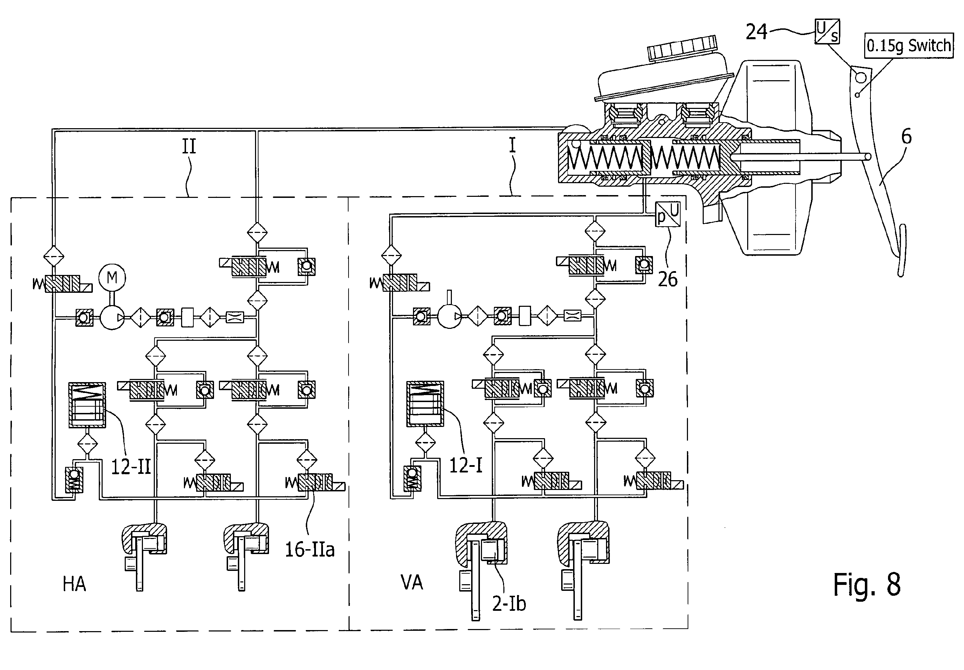

Druckspeicher 12-II des Bremskreises II wird mit Druckmittel befüllt, bis das maximal vom Generator erzeugte Bremsmoment dem des Fahrerbremswunschs entspricht bzw. der Fahrerbremswunsch beginnt, das vom Generator lieferbare Bremsmoment zu übersteigen. Dann wird SG-Ventil 16-IIa wieder geschlossen, wie in Fig. 8 dargestellt. Nun ist eine "normale" (im Sinne einer konventionellen hydraulischen Bremsanlage) Bremsbetätigung durch den Fahrer möglich, d.h. es wird kein Druckmittel mehr in einen Druckspeicher 12 abgelassen.

Wenn das vom Fahrer angeforderte Bremsmoment das vom Generator lieferbare Bremsmoment weiter übersteigt, wird zusätzlich das SO-Ventil 14-Ib der abgesperrten Radbremse 2-Ib geöffnet werden, wie in Fig. 9 dargestellt, um eine erhöhte Abbremsung an dieser Radbremse 2-Ib zu erzielen.

Eine Überführung (Blending) vom einer im Wesentlichen regenerativen Abbremsung des Fahrzeugs hin zu einer Kombination von regenerativem Bremsen und Reibungsbremsen oder auch zum reinen Reibungsbremsen ist notwendig, wenn das vom Generator lieferbare Bremsmoment in Abhängigkeit von der Fahrzeuggeschwindigkeit abnimmt (man spricht auch von einem "ramp-out"), wodurch der Generator weniger Bremsmoment liefern kann als vom Fahrer angefordert wird, so dass die Gesamtbremswirkung durch die Radbremsen ergänzt werden muss. Das Blending oder "Überblenden" von regenerativem Bremsen zu Reibungsbremsen soll mit möglichst geringen Rückwirkungen auf das Bremspedal durchgeführt werden, um den Fahrer nicht zu irritieren.

Prinzipiell könnte ein Blending am entsprechenden Bremskreis auch als Alternative zu einer Aktivierung der bisher abgetrennten Radbremse eingesetzt werden, wobei dann das SO-Ventil 14-Ib geöffnet wird, nachdem das Trennventil 20-I geschlossen wurde, um ein Blending-Verfahren durchzuführen.

In den Fig. 9-13 sind schematisch die einzelnen Schritte einer Ansteuerung der hydraulischen Komponenten während der Durchführung eines beispielsgemäßen Verfahrens zum Blending dargestellt.

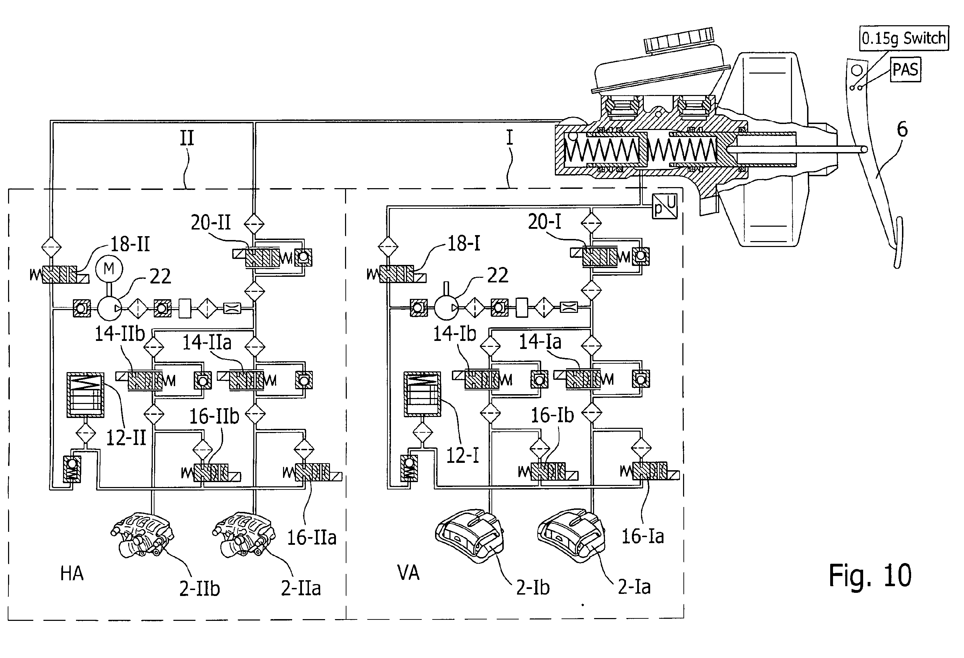

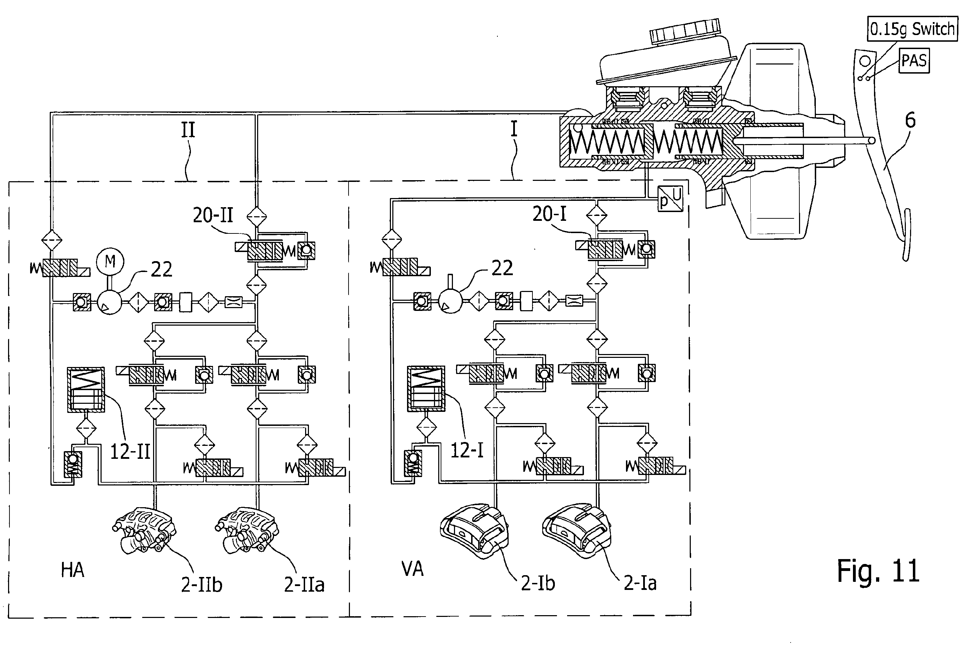

Ausgehend z.B. von dem in Fig. 9 dargestellten Zustand, bei dem die Ventile stromlos sind, werden wie in Fig. 10 dargestellt die Trennventile 20-I, 20-II geschlossen, um Rückwirkungen auf das Bremspedal zu unterdrücken. Dann wird das Motor-Pumpen-Aggregat 22 derart angesteuert, dass Druckmittel aus den Druckspeichern 12-I, 12-II in die Radbremsen 2 gefördert wird (Fig. 11), um das gewünschte Gesamtbremsmoment zu erzielen. Somit findet eine Ergänzung des zu niedrigen oder nachlassenden Generator-Bremsmoments mittels der Reibungsbremsen statt.

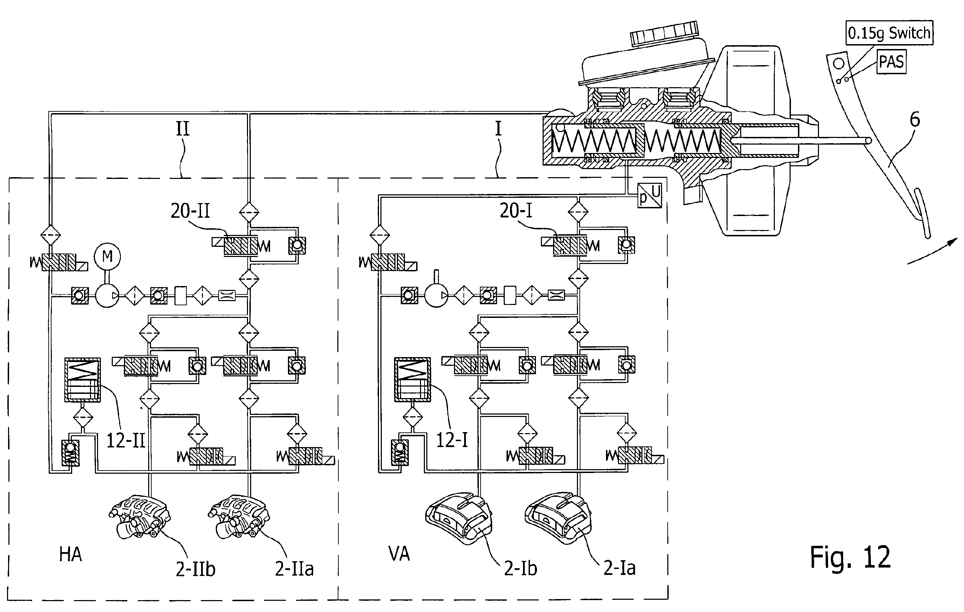

Wenn der Fahrer das Bremspedal 6 löst und das angeforderte Bremsmoment unter das aktuelle Gesamtbremsmoment fällt, wird das Blending beendet, d.h. die Pumpe 22 nicht weiter betrieben. Lässt die Bremsbetätigung weiter nach, so werden die Trennventile 20-I, 20-II geöffnet, wie in Fig. 12 gezeigt.

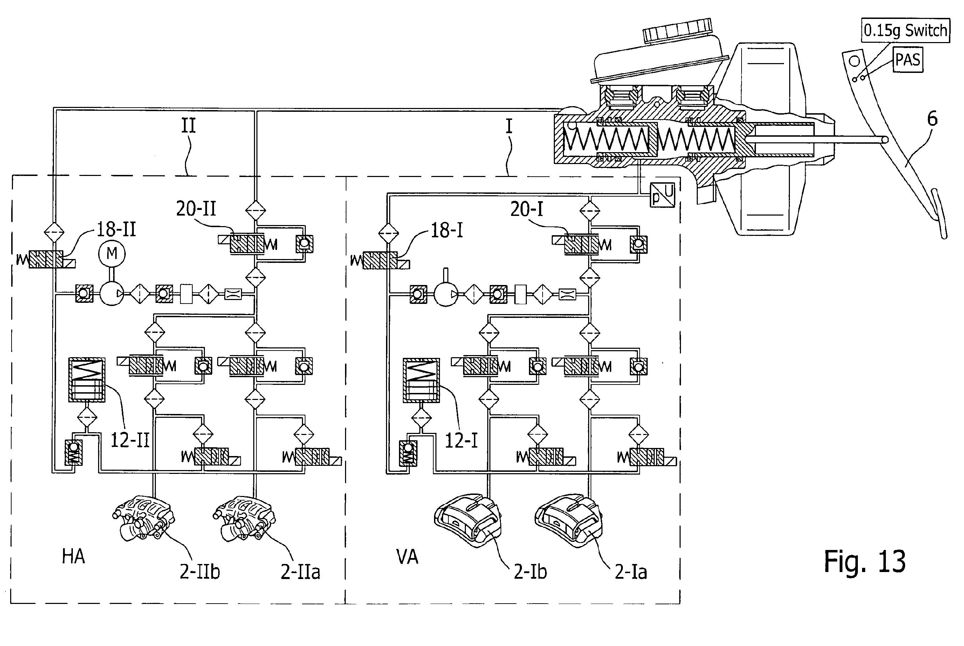

Um die Druckspeicher 12 am Ende des Verfahrens vollständig zu entleeren, werden die elektronischen Umschaltventile 18-I, 18-II, insbesondere mehrmals und für jeweils kurze Zeit, geöffnet (Fig. 13).

Wird der Bremsvorgang vom Fahrer beendet, ohne dass ein Blending-Vorgang erforderlich war, so werden die Druckspeicher durch Öffnen der Auslassventile geleert. Durch mehrmalige kurzzeitige Betätigung der elektronischen Umschaltventile wird anschließend eine vollständige Entleerung sichergestellt.

In einer alternativen bevorzugten Ausführungsform der Erfindung umfasst das Bremssystem ein zweites Sensorelement zur Erfassung einer Bremspedalbetätigung, welches von dem Bremspedalwegsensor oder -winkelsensor 24 unabhängig ist. Wenn die Bremspedalbetätigung einen vorgegebenen Wert erreicht, wird dieses zweite Sensorelement vorteilhafterweise aktiviert und beendet insbesondere einen Befüllungsvorgang eines Druckspeichers (z.B. durch Schließen des/der SG-Ventils/Ventile 16). Hierdurch wird ein korrektes Erkennung des Fahrerbremswunsches sicherstellt, für den Fall, dass das Signal des Bremspedalwegsensors 24 fehlerhaft ist, z.B. aufgrund einer mechanischen Beschädigung des Sensors 24.

Die Aktivierungsschwelle des zweiten Sensorelements sollte auf ein Abbremsungsmaß (Bremsbetätigungsmaß) ausgelegt sein, bei welchem der Generator nicht mehr oder kaum zur Bremsung beiträgt. Das zweite Sensorelement sollte getrennt angebracht sein und über eine eigene Energieversorgung verfügen. Das Sensorelement könnte am Kolben des Druckstangenkreises des Hauptzylinders oder am Bremspedal (ähnlich einem Bremslichtschaltelement, wenn auch mit einem Offset-Schaltpunkt wie oben beschrieben) angeordnet sein. Bei dem in den Figuren 4 bis 13 dargestellten beispielhaften Bremssystem ist das zweite Sensorelement als ein 0.15g (g: Erdbeschleunigung) Schaltelement, welches am Bremspedal 6 angeordnet ist, ausgeführt.

## Patentansprüche

1. Verfahren, bei dem ein Bremssystem (1) für ein Kraftfahrzeug gesteuert und/oder geregelt wird, das mindestens eine elektrisch-regenerative Bremse (4) und ein Druckmittel-betriebenes, insbesondere hydraulisches, Bremssystem mit Radbremsen (2) aufweist, wobei die den einzelnen Rädern zugeordneten Radbremsen (2) in zwei Bremskreisen (I, II) angeordnet sind, welche von einem ersten Bremsdruckerzeugungsmittel (8), einem Tandemhauptbremszylinder, mit Druckmittel beaufschlagbar sind, und wobei jeder Bremskreis (I, II) zumindest einen Druckspeicher (12) und mindestens zwei elektronisch ansteuerbare Hydraulikventile (14, 16, 18, 20) umfasst, wobei bei einem Bremsen mit der oder den elektrisch-regenerativen Bremsen durch eine geeignete Ansteuerung mindestens eines Hydraulikventils (14, 16, 18, 20) zu einem Zeitpunkt Druckmittel nur in genau einen vorbestimmten Druckspeicher (12-I, 12-II) abgeleitet wird, **dadurch gekennzeichnet, dass** die Hydraulikventile, insbesondere Einlass- und Auslassventile (14, 16) der Radbremsen, in den beiden Bremskreisen (I, II) derart angesteuert werden, dass zuerst der Druckspeicher (12-I) des einen Bremskreises (I) und danach der Druckspeicher (12-II) des anderen Bremskreises (II) befüllt wird.

2. Verfahren nach Anspruch 1, **dadurch gekennzeichnet, dass** ein Befüllen eines Druckspeichers (12-I) über ein Auslassventil (16-I-a) nur einer der Radbremsen eines Bremskreises (I) durchgeführt wird.

3. Verfahren nach Anspruch 1, **dadurch gekennzeichnet, dass** eine der Radbremsen (2-I-b) zumindest eines Bremskreises mit einem vorgegebenen Druckmittelvolumen beaufschlagt wird und danach diese Radbremse (2-I-b), insbesondere durch Schließen eines zugehörigen Einlassventils (14-I-b), hydraulisch von dem ersten Bremsdruckerzeugungsmittel (8), und insbesondere dem zugehörigen Druckspeicher (12-1), abgetrennt wird.

4. Verfahren nach Anspruch 3, **dadurch gekennzeichnet, dass** die Radbremse (2-I-b) dann hydraulisch abgetrennt wird, wenn ein erstes vorgegebenes Maß einer Betätigung eines Bremsbetätigungspedals (6) des Tandemhauptbremszylinders erreicht ist, insbesondere wird das erste vorgegebene Maß mittels eines Pedalwinkelsensors (24) und/oder einem geeignet platzierten Schalter detektiert.

5. Verfahren nach Anspruch 4, **dadurch gekennzeichnet, dass** zunächst ein Befüllen eines Druckspeichers (12-1) über ein Auslassventil (16-I-a) einer der Radbremsen (2-I-a) begonnen wird und, wenn das erste vorgegebene Maß der Bremsbetätigung erreicht ist, eine Radbremse (2-I-b) des das Auslassventil umfassenden Bremskreises (I) hydraulisch abgetrennt wird.

6. Verfahren nach Anspruch 4 oder 5, **dadurch gekennzeichnet, dass** das Befüllen des einen Druckspeichers (12-1) beendet und das Befüllen des anderen Druckspeichers (12-II) begonnen wird, wenn ein zweites vorgegebenes Maß einer Betätigung des Bremsbetätigungspedals (6) erreicht ist, wobei das zweite vorgegebene Maß insbesondere mittels eines Pedal winkelsensors (24) detektiert wird und einem vorgegebenen Wert des durch die elektrisch-regenerative Bremse oder Bremsen (4) gelieferte Bremsmoments entspricht, insbesondere einen vorgegebenen Anteil eines maximal gelieferten Bremsmoments der elektrisch-regenerative Bremse oder Bremsen (4).

7. Verfahren nach einem der Ansprüche 4 bis 6, **dadurch gekennzeichnet, dass** die Befüllung der Druckspeicher (12-I, 12-II) beendet und die bisher abgetrennte Radbremse (2-I-b) wieder mit dem ersten Bremsdruckerzeugungsmittel (8) verbunden wird, wenn ein drittes vorgegebenes Maß einer Betätigung des Bremsbetätigungspedals (6) erreicht ist, wobei das dritte vorgegebene Maß insbesondere mittels eines Pedalwinkelsensors (24) oder eines Wegsensors am Tandemhauptbremszylinder detektiert wird und einem vorgegebenen Wert des durch die elektrisch-regenerative Bremse oder Bremsen (4) gelieferte Bremsmoments entspricht, insbesondere einem maximal gelieferten Bremsmoment der elektrisch-regenerative Bremse oder Bremsen (4).

8. Verfahren nach einem der Ansprüche 4 bis 6, **dadurch gekennzeichnet, dass** die Befüllung der Druckspeicher (12-I, 12-II) beendet und die bisher abgetrennte Radbremse (2-I-b) wieder mit dem ersten Bremsdruckerzeugungsmittel (8) verbunden wird, wenn die Differenz zwischen dem an einer Position des ersten Bremskreises gemessenen Druck und dem an einer Position des zweiten Bremskreises gemessenen Druck einen vorgegebenen Schwellwert überschreitet.

9. Verfahren nach einem der Ansprüche 1 bis 8, **dadurch gekennzeichnet, dass**, insbesondere wenn das durch die elektrisch-regenerative Bremse oder Bremsen (4) gelieferte Bremsmoment geringer ist als ein vom Fahrer angefordertes Bremsmoment, das erste Bremsdruckerzeugungsmittel (8), insbesondere durch Schließen eines Trennventils (20), von den Radbremsen (2) hydraulisch getrennt wird, und dass mittels eines zweiten Bremsdruckerzeugungsmittels, insbesondere einer Hydraulikpumpe (22), Bremsmittel aus einem oder beiden Druckspeichern (12) in die Radbremsen (2) gefördert wird.

10. Verfahren nach einem der vorhergehenden Ansprüche, **dadurch gekennzeichnet, dass** die Betätigung der Hydraulikventile (14,16) eines Bremskreises alternierend erfolgt, insbesondere bei einem Bremsvorgang ein erstes Einlassventil (14-I-a, 14-IIa) geschlossen und ein erstes Auslassventil (16-I-a, 16-II-a)geöffnet wird während ein zweites Einlassventil (14-I-b, 14-II-b) geöffnet bleibt und ein zweites Auslassventil (16-Ib, 16-IIb) geschlossen bleibt und im darauf folgenden Bremsvorgang das zweite Einlassventil (14-I-b, 14-II-b) geschlossen und das zweite Auslassventil (16-I-b, 16-IIb) geöffnet wird, während das erste Einlass- (14-I-a, 14-II-a) und Auslassventil (16-Ib, 16-IIb) nicht betätigt werden.

11. Bremssystem (1) eines Kraftfahrzeuges, das mindestens eine elektrisch-regenerative Bremse (4) und ein Druckmittel-betriebenes, insbesondere hydraulisches, Bremssystem mit Radbremsen (2) aufweist, wobei die den einzelnen Rädern zugeordneten Radbremsen (2) in mindestens zwei Bremskreisen (I, II) angeordnet sind, welche von einem ersten Bremsdruckerzeugungsmittel (8), einem Tandemhauptbremszylinder, mit Druckmittel beaufschlagbar sind, und wobei jeder Bremskreis (I, II) zumindest einen Druckspeicher (12) und elektronisch ansteuerbare Hydraulikventile (14, 16, 18, 20) umfasst, **dadurch gekennzeichnet, dass** dieses eine elektronische Steuer- und Regeleinheit (30) umfasst, durch welche bei einem Bremsen mit der oder den elektrisch-regenerativen Bremse mindestens ein Hydraulikventil (14, 16, 18, 20) derart angesteuert wird, dass zu einem Zeitpunkt Druckmittel in genau einen, insbesondere vorbestimmten, Druckspeicher (12-1, 12-II) abgeleitet wird, indem die elektronische Steuer- und Regeleinheit (30) ein Verfahren nach einem der Ansprüche 1 bis 10 durchführt.

12. Bremssystem (1) nach Anspruch 11, **dadurch gekennzeichnet, dass** dieses mindestens ein zweites Bremsdruckerzeugungsmittel aufweist, insbesondere eine Hydraulikpumpe, mit welchem Bremsmittel aus einem Druckspeicher (12) in eine oder mehrere Radbremsen (2) befördert werden kann.

13. Bremssystem (1) nach einem der Ansprüche 11 oder 12, **dadurch gekennzeichnet, dass** in jedem Bremskreis (I, II) an mindestens einer Radbremse (2) ein Drucksensor (28-1, 28-11) angebracht ist.

## Claims

1. Method in which a brake system (1) for a motor vehicle is controlled and/or regulated, said motor vehicle having at least one electrically regenerative brake (4) and a pressure-medium-operated, in particular hydraulic, brake system with wheel brakes (2), wherein the wheel brakes (2) assigned to the individual wheels are arranged in two brake circuits (I, II) which can be charged with pressure medium by a first brake pressure generating means (8), a tandem master brake cylinder, and wherein each brake circuit (I, II) comprises at least one pressure accumulator (12) and at least two electronically activatable hydraulic valves (14, 16, 18, 20), wherein, during a braking process with the one or more electrically regenerative brakes, by means of suitable activation of at least one hydraulic valve (14, 16, 18, 20), at a point in time, pressure medium is discharged only into precisely one predetermined pressure accumulator (12-I, 12-II), **characterized in that** the hydraulic valves, in particular inlet and outlet valves (14, 16) of the wheel brakes, in the two brake circuits (I, II) are activated such that firstly the pressure accumulator (12-I) of one brake circuit (I) and subsequently the pressure accumulator (12-II) of the other brake circuit (II) is filled.

2. Method according to Claim 1, **characterized in that** a filling of a pressure accumulator (12-I) is carried out via an outlet valve (16-I-a) of only one of the wheel brakes of a brake circuit (I).

3. Method according to Claim 1, **characterized in that** one of the wheel brakes (2-I-b) of at least one brake circuit is charged with a predefined pressure medium volume, and said wheel brake (2-I-b) is subsequently hydraulically isolated, in particular through the closure of an associated inlet valve (14-I-b), from the first brake pressure generating means (8) and in particular from the associated pressure accumulator (12-I).

4. Method according to Claim 3, **characterized in that** the wheel brake (2-I-b) is hydraulically isolated when a first predefined measure of an actuation of a brake actuation pedal (6) of the tandem master brake cylinder is attained, the first predefined measure being detected in particular by means of a pedal angle sensor (24) and/or a suitably located switch.

5. Method according to Claim 4, **characterized in that** firstly a filling of a pressure accumulator (12-I) is commenced via an outlet valve (16-I-a) of one of the wheel brakes (2-I-a), and a wheel brake (2-I-b) of the brake circuit (I) comprising the outlet valve is hydraulically isolated when the first predefined measure of the brake actuation is attained.

6. Method according to Claim 4 or 5, **characterized in that** the filling of one pressure accumulator (12-I) is ended and the filling of the other pressure accumulator (12-II) is commenced when a second predefined measure of an actuation of the brake actuation pedal (6) is attained, wherein the second predefined measure is detected in particular by means of a pedal angle sensor (24) and corresponds to a predefined value of the braking torque provided by the electrically regenerative brake or brakes (4), in particular to a predefined fraction of a maximum delivered braking torque of the electrically regenerative brake or brakes (4).

7. Method according to one of Claims 4 to 6, **characterized in that** the filling of the pressure accumulators (12-I, 12-II) is ended and the hitherto isolated wheel brake (2-I-b) is connected to the first brake pressure generating means (8) again when a third predefined measure of an actuation of the brake actuation pedal (6) is attained, wherein the third predefined measure is detected in particular by means of a pedal angle sensor (24) or a travel sensor on the tandem master brake cylinder and corresponds to a predefined value of the braking torque provided by the electrically regenerative brake or brakes (4), in particular to a maximum delivered braking torque of the electrically regenerative brake or brakes (4).

8. Method according to one of Claims 4 to 6, **characterized in that** the filling of the pressure accumulators (12-I, 12-II) is ended and the hitherto isolated wheel brake (2-I-b) is connected to the first brake pressure generating means (8) again when the difference between the pressure measured at a position of the first brake circuit and the pressure measured at a position of the second brake circuit exceeds a predefined threshold value.

9. Method according to one of Claims 1 to 8, **characterized in that**, in particular if the braking torque delivered by the electrically regenerative brake or brakes (4) is lower than a braking torque demanded by the driver, the first brake pressure generating means (8) is hydraulically isolated from the wheel brakes (2) in particular through the closure of an isolating valve (20), and **in that** brake medium is delivered from one or both pressure accumulators (12) into the wheel brakes (2) by means of a second brake pressure generating means, in particular a hydraulic pump (22).

10. Method according to one of the preceding claims, **characterized in that** the actuation of the hydraulic valves (14, 16) of a brake circuit takes place in an alternating fashion, in particular, during one braking process, a first inlet valve (14-I-a, 14-II-a) is closed and a first outlet valve (16-I-a, 16-II-a) is opened while a second inlet valve (14-I-b, 14-II-b) remains open and a second outlet valve (16-Ib, 16-IIb) remains closed, and in the subsequent braking process, the second inlet valve (14-I-b, 14-II-b) is closed and the second outlet valve (16-I-b, 16-IIb) is opened, while the first inlet valve (14-I-a, 14-II-a) and outlet valve (16-Ia, 16-IIa) are not actuated.

11. Brake system (1) of a motor vehicle which has at least one electrically regenerative brake (4) and a pressure-medium-operated, in particular hydraulic brake system with wheel brakes (2), wherein the wheel brakes (2) assigned to the individual wheels are arranged in at least two brake circuits (I, II) which can be charged with pressure medium by a first brake pressure generating means (8), a tandem master brake cylinder, and wherein each brake circuit (I, II) comprises at least one pressure accumulator (12) and electronically activatable hydraulic valves (14, 16, 18, 20), **characterized in that** said brake system comprises an electronic control and regulating unit (30) by means of which, during a braking process with the one or more electrically regenerative brakes, at least one hydraulic valve (14, 16, 18, 20) is activated such that, at a point in time, pressure medium is discharged into precisely one, in particular predetermined pressure accumulator (12-I, 12-II), by the electronic control and regulating unit (30) executing a method according to one of Claims 1 to 10.

12. Brake system (1) according to Claim 11, **characterized in that** said brake system has at least one second brake pressure generating means, in particular a hydraulic pump, by means of which brake medium can be delivered out of a pressure accumulator (12) into one or more wheel brakes (2).

13. Brake system (1) according to either of Claims 11 and 12, **characterized in that**, in each brake circuit (I, II), a pressure sensor (28-I, 28-II) is attached to at least one wheel brake (2).

## Revendications

1. Procédé dans lequel un système de freinage (1) pour un véhicule automobile est commandé et/ou réglé, celui-ci comportant au moins un frein à régénération électrique (4) et un système de freinage entraîné par agent de mise sous pression, notamment hydraulique, avec des freins de roue (2), les freins de roue (2) associés aux roues individuelles étant disposés dans deux circuits de freinage (I, II) pouvant être alimentés en agent de mise sous pression par un premier moyen de production de pression de freinage (8), un maître-cylindre de frein en tandem, et chaque circuit de freinage (I, II) comprenant au moins un accumulateur de pression (12) et au moins deux soupapes hydrauliques (14, 16, 18, 20) à commande électronique, sachant qu'en cas de freinage avec le ou les freins à régénération électrique par une commande adaptée d'au moins une soupape hydraulique (14, 16, 18, 20) à un instant donné, l'agent de mise sous pression n'est dérivé que dans précisément un accumulateur de pression (12-I, 12-II) prédéfini, **caractérisé en ce que** les soupapes hydrauliques, notamment les soupapes d'admission et d'échappement (14, 16) des freins de roue sont commandées de telle sorte dans les deux circuits de freinage (I, II) que l'accumulateur de pression (12-I) du premier circuit de freinage (I) est d'abord rempli suivi de l'accumulateur de pression (12-II) de l'autre circuit de freinage (II).

2. Procédé selon la revendication 1, **caractérisé en ce qu'**un remplissage d'un accumulateur de pression (12-1) est réalisé via une soupape d'échappement (16-1-a) de seulement un des freins de roue d'un circuit de freinage (I).

3. Procédé selon la revendication 1, **caractérisé en ce qu'**un des freins de roue (2-I-b) d'au moins un circuit de freinage est alimenté avec un volume d'agent de mise sous pression prédéfini et qu'ensuite, ce frein de roue (2-I-b), est séparé de façon hydraulique du premier moyen de production de pression de freinage (8), et notamment de l'accumulateur de pression (12-1) associé, notamment par fermeture d'une soupape d'admission (14-I-b) associée.

4. Procédé selon la revendication 3, **caractérisé en ce que** le frein de roue (2-I-b) est ensuite séparé de façon hydraulique lorsqu'une première mesure prédéfinie d'un actionnement d'une pédale d'actionnement de frein (6) du maître-cylindre de frein en tandem est atteinte, notamment que la première mesure prédéfinie est détectée à l'aide d'un détecteur d'angle de pédale (24) et/ou d'un contacteur placé de façon adaptée.

5. Procédé selon la revendication 4, **caractérisé en ce qu'**un remplissage d'un accumulateur de pression (12-1) commence d'abord via une soupape d'échappement (16-I-a) d'un des freins de roue (2-I-a) et que lorsque la première mesure prédéfinie de l'actionnement de frein est atteinte, un frein de roue (2-I-b) du circuit de freinage (I) comprenant la soupape d'échappement est séparé de façon hydraulique.

6. Procédé selon la revendication 4 ou 5, **caractérisé en ce que** le remplissage du premier accumulateur de pression (12-1) prend fin et que le remplissage de l'autre accumulateur de pression (12-II) commence lorsqu'une deuxième mesure prédéfinie d'un actionnement de la pédale d'actionnement de frein (6) est atteinte, la deuxième mesure prédéfinie étant notamment détectée à l'aide d'un détecteur d'angle de pédale (24) et correspondant à une valeur prédéfinie du couple de freinage fourni par le ou les freins à régénération électrique (4), notamment une partie prédéfinie d'un couple de freinage maximum fourni du ou des freins à régénération électrique (4).

7. Procédé selon l'une quelconque des revendications 4 à 6, **caractérisé en ce que** le remplissage de l'accumulateur de pression (12-I, 12-II) prend fin et que le frein de roue (2-I-b) jusqu'ici séparé est de nouveau relié au premier moyen de production de pression de freinage (8) lorsqu'une troisième mesure prédéfinie d'un actionnement de la pédale d'actionnement de frein (6) est atteinte, la troisième mesure prédéfinie étant notamment détectée à l'aide d'un détecteur d'angle de pédale (24) ou d'un capteur de course au niveau du maître-cylindre de frein en tandem et correspondant à une valeur prédéfinie du couple de freinage fourni par le ou les freins à régénération électrique (4), notamment un couple de freinage maximal fourni du ou des freins à régénération électrique (4).

8. Procédé selon l'une quelconque des revendications 4 à 6, **caractérisé en ce que** le remplissage de l'accumulateur de pression (12-I, 12-II) prend fin et que le frein de roue (2-I-b) jusqu'ici séparé est de nouveau relié au premier moyen de production de pression de freinage (8) lorsque la différence entre la pression mesurée dans une position du premier circuit de freinage et la pression mesurée dans une position du deuxième circuit de freinage dépasse une valeur seuil prédéfinie.

9. Procédé selon l'une quelconque des revendications 1 à 8, **caractérisé en ce que**, notamment lorsque le couple de freinage fourni par le ou les freins à régénération électrique (4) est inférieur à un couple de freinage demandé par le conducteur, le premier moyen de production de pression de freinage (8) est séparé de façon hydraulique des freins de roue (2), notamment par fermeture d'une soupape de séparation (20), et que le liquide de frein est extrait hors d'un ou des deux accumulateurs de pression (12) prévus dans les freins de roue (2) à l'aide d'un deuxième moyen de production de pression de freinage, notamment d'une pompe hydraulique (22).

10. Procédé selon l'une quelconque des revendications précédentes, **caractérisé en ce que** l'actionnement des soupapes hydrauliques (14, 16) d'un circuit de freinage se produit en alternance, notamment, au cours d'un processus de freinage, une première soupape d'admission (14-I-a, 14-II-a) étant fermée et une première soupape d'échappement (16-I-a, 16-II-a) étant ouverte pendant qu'une deuxième soupape d'admission (14-I-b, 14-II-b) reste ouverte et qu'une deuxième soupape d'échappement (16-Ib, 16-IIb) reste fermée et qu'au cours du processus de freinage suivant, la deuxième soupape d'admission (14-I-b, 14-II-b) est fermée et la deuxième soupape d'échappement (16-I-b, 16-IIb) est ouverte lorsque la première soupape d'admission (14-I-a, 14-II-a) et la soupape d'échappement (16-Ib, 16-IIb) ne sont pas actionnées.

11. Système de freinage (1) d'un véhicule automobile, comportant au moins un frein à régénération électrique (4) et un système de freinage entraîné par agent de mise sous pression, notamment hydraulique, avec des freins de roue (2), les freins de roue (2) associés aux roues individuelles étant disposés dans au moins deux circuits de freinage (I, II) pouvant être alimentés en agent de mise sous pression par un premier moyen de production de pression de freinage (8), un maître-cylindre de frein en tandem, et chaque circuit de freinage (I, II) comprenant au moins un accumulateur de pression (12) et des soupapes hydrauliques à commande électronique (14, 16, 18, 20), **caractérisé en ce que** celui-ci comporte une unité de commande et de réglage électronique (30) à travers laquelle en cas de freinage avec le ou les freins à régénération électrique, au moins une soupape hydraulique (14, 16, 18, 20) est commandée de telle sorte qu'à un instant donné, l'agent de mise sous pression est dérivé dans précisément un accumulateur de pression (12-1, 12-II), notamment prédéfini, en amenant l'unité de commande et de réglage électronique (30) à exécuter un procédé selon l'une quelconque des revendications 1 à 10.

12. Système de freinage (1) selon la revendication 11, **caractérisé en ce que** celui-ci comporte au moins un deuxième moyen de production de pression de freinage, notamment une pompe hydraulique, à l'aide duquel le liquide de frein peut être extrait d'un accumulateur de pression (12) pour être amené dans un ou plusieurs freins de roue (2).

13. Système de freinage (1) selon l'une quelconque des revendications 11 ou 12, **caractérisé en ce qu'**un capteur de pression (28-1, 28-11) est disposé dans chaque circuit de freinage (I, II) au niveau d'au moins un frein de roue (2).
